# EUROPEAN PATENT APPLICATION

(11) **EP 3 893 456 A1**
(43) Date of publication of application: **13.10.2021**
(21) Application number: 19899509.4
(22) Date of filing: 28.10.2019
(51) Int. Cl.: H04L 29/06

(54) **DATA TRANSMISSION METHOD AND RELATED APPARATUS**

(30) Priority: 20.12.2018 CN 201811562843
(71) Applicant: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Fassio, Valeria
(86) International application number: PCT/CN2019/113694
(87) International publication number: WO 2020/125202

(57) **Abstract**

Disclosed by the present application are a data transmission method and related apparatus, used for an electronic device, said electronic device enabling a plurality of wireless communication links, said method comprising: if it is detected that a target game application is running in the foreground, then determining a target anti-addiction control duration of said target game application; if it is detected that the target game application shunts and transmits a game data packet by means of a smart link aggregation (SLA) function, then recording the shunt transmission duration of the shunting and transmission of said game data packet; if it is detected that the shunt transmission duration is longer than the target anti-addiction control duration, then ceasing to stream the game data packets by means of the SLA function and transmitting the game data packets by means of one wireless communication link of the plurality of wireless communication links. The present application is advantageous for helping a user to control the duration of a game.

## Description

### TECHNICAL FIELD

This disclosure relates to the field of electronic technology, and more particularly to a data transmission method and a related apparatus.

### BACKGROUND

With the development of mobile communication technology, users' demand for data communication is increasing. At present, smart terminals on the market, when transmitting data, generally send data through cellular mobile network communication or Wi-Fi communication, smart terminals need to compete with other devices in the same area for wireless link resources, therefore it is difficult to meet users' Internet demands.

### SUMMARY

The embodiments of the disclosure provide a data transmission method and a related device, to realize the control of the user's game duration by disabling the Smart Link Aggregation function.

In a first aspect, the embodiment of the disclosure provides a data transmission method applied to an electronic device, the electronic device enables a plurality of wireless communication links, and the method includes:
determining a target anti-addiction control duration of a target game application in response to detecting the target game application is running in a foreground;
recording an offload transmission duration for offloading and transmitting a game data packet in response to detecting the target game application offloads and transmits the game data packet through a Smart Link Aggregation (SLA); and
ceasing to offload and transmit the game data packet through the SLA and transmitting the game data packet through one of the plurality of wireless communication links in response to detecting the offload transmission duration is longer than the target anti-addiction control duration.

In a second aspect, the embodiment of the disclosure provides a data transmission apparatus, applied to an electronic device, the data transmission apparatus includes a processing unit and a communication unit, and the processing unit is configured to:
determine a target anti-addiction control duration of a target game application in response to detecting the target game application is running in a foreground; record an offload transmission duration for offloading and transmitting a game data packet in response to detecting the target game application offloads and transmits the game data packet through a Smart Link Aggregation (SLA); and cease to offload and transmit the game data packet through the SLA and transmit, controlled by the communication unit, the game data packet through one of a plurality of wireless communication links in response to detecting the offload transmission duration is longer than the target anti-addiction control duration.

In a third aspect, the embodiment of the disclosure provides an electronic device, including a processor, a memory, a communication interface, and one or more programs. The one or more programs are stored in the memory and configured to be executed by the processor, and the one or more programs includes instructions for executing steps in any method of the first aspect of the embodiment of the disclosure.

In a fourth aspect, the embodiment of the disclosure provides a computer-readable storage medium, the computer-readable storage medium stores a computer program for electronic data exchange, and the computer program enables a computer to perform part or all of the steps described in any method of the first aspect of the embodiment of the disclosure.

In a fifth aspect, the embodiment of the disclosure provides a computer program product, the computer program product includes a non-transitory computer-readable storage medium storing a computer program, and the computer program is operable to enable a computer to perform part or all of the steps described in any method of the first aspect of the embodiment of the disclosure. The computer program product may be a software installation package.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

### BRIEF DESCRIPTION OF THE DRAWINGS

In order to more clearly describe the technical solutions in the embodiments of the disclosure or in the prior art, drawings that need to be used in the embodiments of the disclosure or in the prior art will be described below.
FIG. 1 is an exemplary architecture diagram of a wireless communication system in which an electronic device according to an embodiment of the disclosure is located;
FIG. 2 is a schematic flowchart showing a data transmission method according to an embodiment of the disclosure;
FIG. 3 is a schematic flowchart showing another data transmission method according to an embodiment of the disclosure;
FIG. 4 is a schematic flowchart showing yet another data transmission method according to an embodiment of the disclosure;
FIG. 5 is a schematic diagram showing the structure of an electronic device according to an embodiment of the disclosure; and
FIG. 6 is a block diagram showing the functional units of a data transmission apparatus according to an embodiment of the disclosure.

### DETAILED DESCRIPTION OF PREFERRED EMBODIMENTS

In order to enable those of ordinary skill in the art to better understand the solutions of the disclosure, the technical solutions in the embodiments of the disclosure will be clearly and completely described below with reference to the drawings in the embodiments of the disclosure. Obviously, the described embodiments are only some of the embodiments of this application, rather than all the embodiments. Based on the embodiments in the disclosure, all other embodiments obtained by those of ordinary skill in the art without creative work shall fall within the protection scope of this disclosure.

Detailed descriptions are given below.

The terms "first", "second", "third", and "fourth" in the specification, claims, and drawings of the disclosure are used to distinguish different objects, but not to describe a specific sequence. In addition, the terms "including", "having", and any variations thereof are intended to cover non-exclusive inclusion. For example, a process, a method, a system, a product, or a device that includes a series of steps or units is not limited to the listed steps or units, but optionally includes unlisted steps or units, or optionally includes other steps or units inherent to this process, method, product, or device.

Mentioning "embodiment" herein means that a specific feature, structure, or characteristic described with reference to the embodiment may be included in at least one embodiment of the disclosure. The appearance of "embodiment" in various places of the specification does not necessarily refer to the same embodiment, nor is it an independent or alternative embodiment mutually exclusive with other embodiments. Those of ordinary skill in the art explicitly and implicitly understand that the embodiments described herein can be combined with other embodiments.

The electronic device involved in the embodiments of the disclosure may be an electronic device with data transmission capabilities. The electronic device may include various handheld devices, vehicle-mounted devices, wearable devices and computing devices with wireless communication functions, or other processing devices connected to wireless modems, and various forms of User Equipment (UE), Mobile Station (MS), terminal device, etc.

The embodiments of the disclosure are described in detail below.

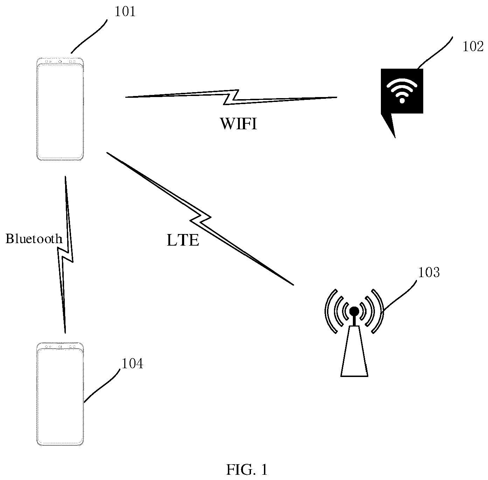

Smart Link Aggregation (SLA) means that a device can use two or more network ports to access the Internet at the same time. For example, if the Smart Link Aggregation function is enabled on a mobile phone, the mobile phone can use wireless fidelity (Wi-Fi) and data network LTE for network access at the same time. In the android network system, when Wi-Fi is enabled, the data network is made to be unavailable (the ConnectivityService network scoring mechanism causes the data network to be disconnected), while Smart Link Aggregation requires at least two available networks, therefore, the prerequisite of the Service-Level Agreement (SLA) is to enable Wi-Fi and data networks to coexist. As shown in FIG. 1, the current electronic device 101 can be connected to a data network 103, which is a communication network configured to transmit data service; the electronic device 101 can also be connected to Wi-Fi 102, which is a technology that allows electronic devices to connect to a wireless LAN, usually using 2.4G UHF or 5G SHF ISM radio frequency band; the electronic device 101 can also be connected to Bluetooth 104, which is a wireless technology standard that can realize short-distance data exchange among fixed devices, mobile devices, building personal area networks, and so on (using 2.4-2.485GHz UHF radio waves in ISM band).

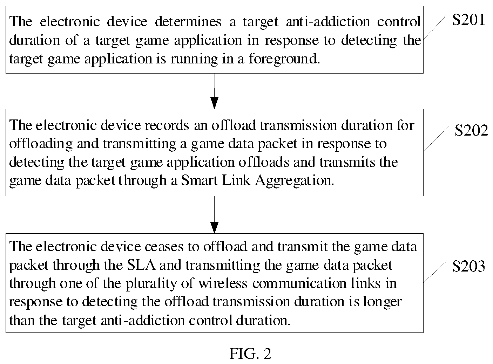

FIG. 2 illustrates a schematic flowchart showing a data transmission method according to an embodiment of the disclosure, the method is applied to an electronic device that enables a plurality of wireless communication links. The data transmission method includes the following steps.

S201: upon detecting a target game application is running in a foreground, the electronic device determines a target anti-addiction control duration of the target game application.

In order to prevent users from playing games for too long and indulging in games, each game application is provided with anti-addiction control duration. After the user plays games for a duration which exceeds the anti-addiction control duration, it is necessary to control the user's game duration. Therefore, when it is detected that there is a target game application running in the foreground, the anti-addiction control duration of the target game application can be determined.

S202: upon detecting the target game application offloads and transmits a game data packet through a Smart Link Aggregation function, the electronic device records an offload transmission duration for offloading and transmitting the game data packet.

When the Smart Link Aggregation function is enabled to offload and transmit the game data packet of the target game application, the offload transmission duration for offloading and transmitting the game data packet is recorded, and the game data packet is offloaded and transmitted through the Smart Link Aggregation function, so that the transmission efficiency of the game data packet is higher, which is conducive to reducing lag and improving users' game experience.

S203: upon detecting the offload transmission duration is longer than the target anti-addiction control duration, the electronic device ceases to offload and transmit the game data packet through the Smart Link Aggregation function, and transmits the game data packet through one of the plurality of wireless communication links.

When it is detected that the offload transmission duration is longer than the target anti-addiction control duration, stop offloading and transmitting the game data packet of the target game application through the Smart Link Aggregation function. At this time, only one of the plurality of wireless communication links is adopted to transmits the game data packet, thereby reducing the transmission efficiency of the game data packet.

In a possible example, the transmitting the game data packet through one of the plurality of wireless communication links includes: acquiring a third wireless communication link initially set by the target game application; and transmitting the game data packet through the third wireless communication link.

Before offloading and transmitting the game data packet is detected, the target game application defaults to transmit the game packet through the third wireless communication link, and after offloading and transmitting the game data packet is over, the target game application continues to transmit the game data packet through the third wireless communication link.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

In a possible example, the recording an offload transmission duration for offloading and transmitting the game data packet includes: upon detecting the target game application closes the Smart Link Aggregation function or exits from the foreground, ceasing the recording an offload transmission duration for offloading and transmitting the game data packet; and upon detecting the target game application enables the Smart Link Aggregation function and is running in the foreground, resuming the recording an offload transmission duration for offloading and transmitting the game data packet.

When recording the offload transmission duration for offloading and transmitting game data packet, if it is detected that the target game application closes the Smart Link Aggregation function, it indicates that the game data packet is not transmitted by offloading at this time, the recording of the offload transmission duration can be stopped. Or, if it is detected that the target game application exits from the foreground, it indicates that the user is not playing the game at this time, the recording of the offload transmission duration can also be stopped.

It can be seen that, in this example, when it is detected that the target game application enables the Smart Link Aggregation function and is running in the foreground at the same time, keep recording the offload transmission duration, while when it is detected that the above two conditions are not met, stop recording the offload transmission duration, which is beneficial to accurately obtain the offload transmission duration.

In a possible example, the detecting the target game application offloads and transmits a game data packet through a Smart Link Aggregation function includes: selecting, randomly, at least two wireless communication links to offload and transmit the game data packet of the target game application; or selecting, according to system state parameters, at least two wireless communication links to offload and transmit the game data packet of the target game application; or selecting, according to user setting information, at least two wireless communication links to offload and transmit the game data packet of the target game application.

When the target game application offloads and transmits the game data packet through the Smart Link Aggregation function, at least two wireless communication links can be randomly selected, or at least two wireless communication links can be selected according to system state parameters, for example, the at least two wireless communication links can be selected according to the remaining power of the electronic device or according to the mode of the electronic device, or at least two wireless communication links can selected according to the user setting information, that is, the user can set fixed wireless communication links. For example, it is set as long as there is a game playing scene, the WIFI wireless communication link is always activated, and the data packet of the target game application is transmitted through at least two wireless communication links, which is beneficial to improve the data transmission efficiency.

It can be seen that, in this example, the electronic device selects at least two wireless communication links in a variety of ways, thereby improving the convenience and stability of data transmission.

In a possible example, the transmitting the game data packet through one of the plurality of wireless communication links includes: determining the wireless communication links for offloading and transmitting the game data packet of the target game application as a first wireless communication link and a second wireless communication link; acquiring channel quality parameters of the first wireless communication link and the second wireless communication link, the channel quality parameter including a data transmission rate and a transmission delay; and determining, according to the channel quality parameters of the first wireless communication link and the second wireless communication link, to transmit the game data packet through the first wireless communication link or the second wireless communication link when offload and transmission of the game data packet is ended.

When it is determined that the wireless communication links for offloading and transmitting the game data packet of the target game application are the first wireless communication link and the second wireless communication link, the channel quality parameters of the first wireless communication link and the second wireless communication link is acquired, then it is determined, according to the channel quality parameters of the first wireless communication link and the second wireless communication link, whether to transmit the game data packet only through the first wireless communication link or to transmit the game data packet only through the second wireless communication link when offload and transmission of the game data packet is ended.

It can be seen that, in this example, when offload and transmission is detected, the first wireless communication link and the second wireless communication link jointly transmit the game data packet, when offload and transmission is disabled, only the first wireless communication link or the second wireless communication link can be adopted to transmit the game data packet. By reducing the communication links for data transmission, the transmission efficiency of the data packet is reduced, so that users can be controlled to reduce the duration of playing games.

In a possible example, the determining, according to the channel quality parameters of the first wireless communication link and the second wireless communication link, to transmit the game data packet through the first wireless communication link or the second wireless communication link when offload and transmission of the game data packet is ended includes: scoring, according to the channel quality parameter of the first wireless communication link, the communication quality of the first wireless communication link to obtain a first score; scoring, according to the channel quality parameter of the second wireless communication link, the communication quality of the second wireless communication link to obtain a second score; upon detecting the first score is lower than the second score, transmitting the game data packet through the first wireless communication link; and upon detecting the second score is lower than the first score, transmitting the game data packet through the second wireless communication link.

The channel quality parameter includes a data transmission rate and a transmission delay. Therefore, based on the channel quality parameters, the communication quality of the first wireless communication link can be determined and scored to obtain the first score, and the communication quality of the second wireless communication link can be determined and scored to obtain the second score. When it is detected that the first score is lower than the second score, it indicates that the communication quality of the first wireless communication link is worse, at this time, the game data packet can be transmitted through the first wireless communication link. When it is detected that the second score is lower than the first score, it indicates that the communication quality of the second wireless communication link is worse, at this time, the game data packet can be transmitted through the second wireless communication link.

It can be seen that, in this example, the communication quality of the first wireless communication link and that of the second wireless communication link are scored according to the channel quality parameter of the first wireless communication link and the channel quality parameter of the second wireless communication link, respectively. Therefore, a wireless communication link with worse communication quality is selected to transmit the game data packet, by reducing the data transmission speed of the target game application, the user can be controlled to reduce the duration of playing games.

In a possible example, the first wireless communication link is a wireless fidelity (WIFI) wireless communication link, and the second wireless communication link is a data network wireless communication link.

When the first wireless communication link is a wireless fidelity (WIFI) wireless communication link, the communication quality of the WIFI wireless communication link is determined and scored. For example, the larger the data transmission rate, the better the communication quality, and the higher the score; the smaller the transmission delay, the better the communication quality, and the higher the score; the smaller the data transmission rate, the worse the communication quality, and the lower the score; the larger the transmission delay, the worse the communication quality, and the lower the score. Similarly, when the second wireless communication link is a data network wireless communication link, it can be scored according to the data transmission rate and the transmission delay.

It can be seen that, in this example, the first wireless communication link is a WIFI wireless communication link, and the second wireless communication link is a data network wireless communication link. After offload and transmission is stopped, the game data packet can be transmitted only through the WIFI wireless communication link or the data network wireless communication link.

In a possible example, an average usage duration of a plurality of game applications is acquired, the plurality of game applications include the target game application; the anti-addiction control duration of each of the plurality of game applications is determined according to the average usage duration of the plurality of game applications; and a mapping relationship between the plurality of game applications and corresponding anti-addiction control durations is established, the mapping relationship is configured to determine the target anti-addiction control duration of the target game application.

The average usage duration of a plurality of game applications is acquired, the anti-addiction control duration of each game application is determined according to the average usage duration of the plurality of game applications, and the anti-addiction control duration should not be greater than the average usage duration. After the anti-addiction control duration of each game application is determined, the mapping relationship between the plurality of game applications and corresponding anti-addiction control durations can be established.

It can be seen that, in this example, by pre-establishing the mapping relationship between the plurality of game applications and corresponding anti-addiction control durations, when determining the anti-addiction control duration of the target game application, the target anti-addiction control duration can be determined by simply querying the mapping relationship, so that the duration the user using the target game application does not exceed the anti-addiction control duration, that is, does not exceed the average usage duration.

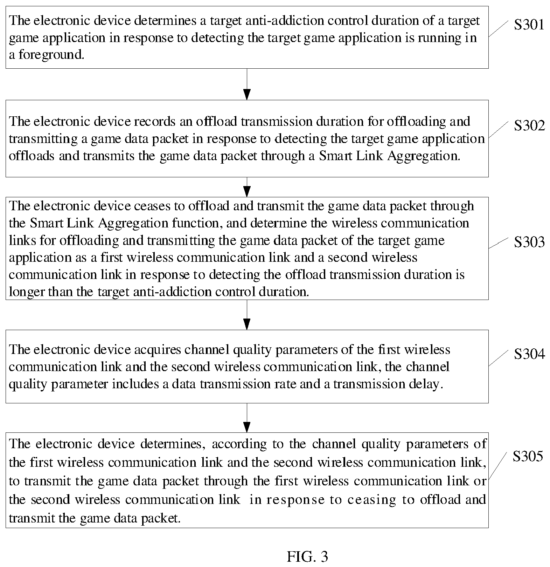

Consistent with the embodiment shown in FIG. 2, FIG. 3 illustrates a schematic flowchart showing another data transmission method according to an embodiment of the disclosure, and the method is applied to an electronic device that enables a plurality of wireless communication links. As shown in the figure, the data transmission method includes the following steps:
S301: upon detecting a target game application is running in a foreground, the electronic device determines a target anti-addiction control duration of the target game application.
S302: upon detecting the target game application offloads and transmits a game data packet through a Smart Link Aggregation function, the electronic device records an offload transmission duration for offloading and transmitting the game data packet.
S303: upon detecting the offload transmission duration is longer than the target anti-addiction control duration, the electronic device ceases to offload and transmit the game data packet through the Smart Link Aggregation function, and determine the wireless communication links for offloading and transmitting the game data packet of the target game application as a first wireless communication link and a second wireless communication link.
S304: the electronic device acquires channel quality parameters of the first wireless communication link and the second wireless communication link, the channel quality parameter includes a data transmission rate and a transmission delay.
S305: the electronic device determines, according to the channel quality parameters of the first wireless communication link and the second wireless communication link, to transmit the game data packet through the first wireless communication link or the second wireless communication link when offload and transmission of the game data packet is ended.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

In addition, when offload and transmission is detected, the first wireless communication link and the second wireless communication link jointly transmit the game data packet, when offload and transmission is disabled, only the first wireless communication link or the second wireless communication link can be adopted to transmit the game data packet. By reducing the communication links for data transmission, the transmission efficiency of the data packet is reduced, so that users can be controlled to reduce the duration of playing games.

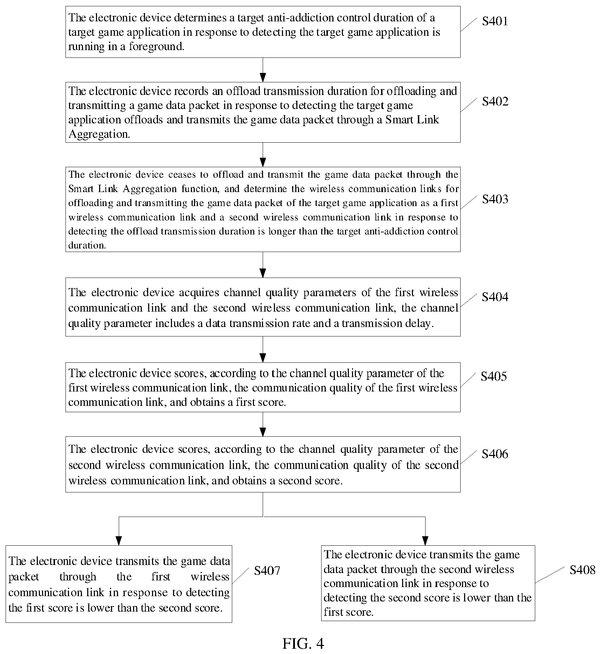

Consistent with the embodiments shown in FIGS. 2-3, FIG. 4 illustrates a schematic flowchart showing yet another data transmission method according to an embodiment of the disclosure, and the method is applied to an electronic device that enables a plurality of wireless communication links. As shown in the figure, the data transmission method includes the following steps:
S401: upon detecting a target game application is running in a foreground, the electronic device determines a target anti-addiction control duration of the target game application.
S402: upon detecting the target game application offloads and transmits a game data packet through a Smart Link Aggregation function, the electronic device records an offload transmission duration for offloading and transmitting the game data packet.
S403: upon detecting the offload transmission duration is longer than the target anti-addiction control duration, the electronic device ceases to offload and transmit the game data packet through the Smart Link Aggregation function, and determine the wireless communication links for offloading and transmitting the game data packet of the target game application as a first wireless communication link and a second wireless communication link.
S404. the electronic device acquires channel quality parameters of the first wireless communication link and the second wireless communication link, the channel quality parameter includes a data transmission rate and a transmission delay.
S405: the electronic device scores, according to the channel quality parameter of the first wireless communication link, the communication quality of the first wireless communication link to obtain a first score.
S406: the electronic device scores, according to the channel quality parameter of the second wireless communication link, the communication quality of the second wireless communication link to obtain a second score.
S407: the electronic device transmits the game data packet through the first wireless communication link, upon detecting the first score is lower than the second score.
S408: the electronic device transmits the game data packet through the second wireless communication link, upon detecting the second score is lower than the first score.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

In addition, when offload and transmission is detected, the first wireless communication link and the second wireless communication link jointly transmit the game data packet, when offload and transmission is disabled, only the first wireless communication link or the second wireless communication link can be adopted to transmit the game data packet. By reducing the communication links for data transmission, the transmission efficiency of the data packet is reduced, so that users can be controlled to reduce the duration of playing games.

In addition, the communication quality of the first wireless communication link and that of the second wireless communication link are scored according to the channel quality parameter of the first wireless communication link and the channel quality parameter of the second wireless communication link, respectively. Therefore, a wireless communication link with worse communication quality is selected to transmit the game data packet, by reducing the data transmission speed of the target game application, the user can be controlled to reduce the duration of playing games.

Consistent with the embodiments shown in FIGS. 2-4, FIG. 5 illustrates a schematic diagram showing the structure of an electronic device 500 according to an embodiment of the disclosure. One or more application programs and operating systems may be running in the electronic device 500. As shown in the figure, the electronic device 500 includes a processor 510, a memory 520, a communication interface 530, and one or more programs 521, the one or more programs 521 are stored in the memory 520 and configured to be executed by the processor 510, the one or more programs 521 include instructions for executing steps of:
upon detecting a target game application is running in a foreground, determining a target anti-addiction control duration of the target game application;
upon detecting the target game application offloads and transmits a game data packet through a Smart Link Aggregation function, recording an offload transmission duration for offloading and transmitting the game data packet; and
upon detecting the offload transmission duration is longer than the target anti-addiction control duration, ceasing to offload and transmit the game data packet through the Smart Link Aggregation function, and transmitting the game data packet through one of the plurality of wireless communication links.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

In a possible example, in the aspect of recording an offload transmission duration for offloading and transmitting the game data packet, the instructions in the programs are specifically configured to execute operations of: upon detecting the target game application closes the Smart Link Aggregation function or exits from the foreground, ceasing the recording an offload transmission duration for offloading and transmitting the game data packet; and upon detecting the target game application enables the Smart Link Aggregation function and is running in the foreground, resuming the recording an offload transmission duration for offloading and transmitting the game data packet.

In a possible example, in the aspect of detecting the target game application offloads and transmits a game data packet through a Smart Link Aggregation function, the instructions in the programs are specifically configured to execute operations of: selecting, randomly, at least two wireless communication links to offload and transmit the game data packet of the target game application; or selecting, according to system state parameters, at least two wireless communication links to offload and transmit the game data packet of the target game application; or selecting, according to user setting information, at least two wireless communication links to offload and transmit the game data packet of the target game application.

In a possible example, in the aspect of transmitting the game data packet through one of the plurality of wireless communication links, the instructions in the programs are specifically configured to execute operations of: determining the wireless communication links for offloading and transmitting the game data packet of the target game application as a first wireless communication link and a second wireless communication link; acquiring channel quality parameters of the first wireless communication link and the second wireless communication link, the channel quality parameter including a data transmission rate and a transmission delay; and determining, according to the channel quality parameters of the first wireless communication link and the second wireless communication link, to transmit the game data packet through the first wireless communication link or the second wireless communication link when offload and transmission of the game data packet is ended.

In a possible example, in the aspect of determining, according to the channel quality parameters of the first wireless communication link and the second wireless communication link, to transmit the game data packet through the first wireless communication link or the second wireless communication link when offload and transmission of the game data packet is ended, the instructions in the programs are specifically configured to execute operations of: scoring, according to the channel quality parameter of the first wireless communication link, the communication quality of the first wireless communication link to obtain a first score; scoring, according to the channel quality parameter of the second wireless communication link, the communication quality of the second wireless communication link to obtain a second score; upon detecting the first score is lower than the second score, transmitting the game data packet through the first wireless communication link; and upon detecting the second score is lower than the first score, transmitting the game data packet through the second wireless communication link.

In a possible example, the first wireless communication link is a wireless fidelity (WIFI) wireless communication link, and the second wireless communication link is a data network wireless communication link.

In a possible example, the instructions in the program are specifically configured to perform operations of: acquiring an average usage duration of a plurality of game applications, the plurality of game applications including the target game application; determining, according to the average usage duration of the plurality of game applications, the anti-addiction control duration of each of the plurality of game applications; and establishing a mapping relationship between the plurality of game applications and corresponding anti-addiction control durations, the mapping relationship being configured to determine the target anti-addiction control duration of the target game application.

The foregoing embodiment mainly introduces the solution of the embodiments of the disclosure from the perspective of the execution process on the method side. It can be understood that, in order to implement the above-mentioned functions, the electronic device includes hardware structures and/or software modules corresponding to each function. For those of ordinary skill in the art, it is easy to realize that the disclosure can be implemented in the form of hardware or a combination of hardware and computer software in combination with the units and algorithm steps of each example described in the embodiments disclosed herein. Whether a certain function is executed by hardware or executed in a way that computer software drives hardware depends on the specific application and design constraint conditions of the technical solution. For each specific application, professionals and technicians can use different methods to implement the described functions, but such implementation should not be considered beyond the scope of the disclosure.

The embodiment of the disclosure may divide the functional units of the electronic device according to the method example. For example, each functional unit may be divided corresponding to each function, or two or more functions may be integrated into one processing unit. The integrated unit can be implemented in the form of hardware or in the form of software functional unit. It should be noted that the division of units in the embodiment of the disclosure is illustrative, and is only a logical function division, and there may be other division methods in actual implementation.

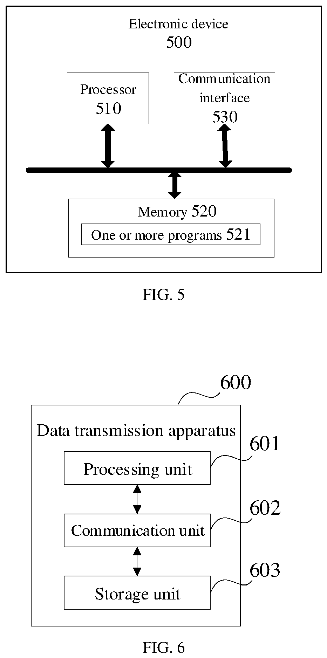

FIG. 6 is a block diagram showing the functional units of a data transmission apparatus 600 involved in an embodiment of the disclosure. The data transmission apparatus 600 is applied to an electronic device, and includes a processing unit 601 and a communication unit 602.

The processing unit 601 is configured to: upon detecting a target game application is running in a foreground, determine a target anti-addiction control duration of the target game application; upon detecting the target game application offloads and transmits a game data packet through a Smart Link Aggregation function, record an offload transmission duration for offloading and transmitting the game data packet; and upon detecting the offload transmission duration is longer than the target anti-addiction control duration, cease to offload and transmit the game data packet through the Smart Link Aggregation function, and transmit, controlled by the communication unit 602, the game data packet through one of a plurality of wireless communication links.

The data transmission apparatus 600 may further include a storage unit 603 for storing program codes and data of the electronic device. The processing unit 601 may be a processor, the communication unit 602 may be a touch screen or a transceiver, and the storage unit 603 may be a memory.

It can be seen that, in the embodiment of the disclosure, firstly, when it is detected that the target game application is running in the foreground, the electronic device determines the target anti-addiction control duration of the target game application. Secondly, when it is detected that the target game application offloads and transmits the game data packet through the Smart Link Aggregation function, the electronic device records the offload transmission duration for offloading and transmitting the game data packet. Finally, when it is detected that the offload transmission duration is longer than the target anti-addiction control duration, the electronic device ceases to offload and transmit the game data packet through the Smart Link Aggregation function and transmits the game data packet through one of a plurality of wireless communication links. The electronic device determines the corresponding target anti-addiction control duration when detecting that there is a target game application running in the foreground, records the offload transmission duration for offloading and transmitting the game data packet when offloading and transmitting the game data packet through the Smart Link Aggregation function, and disables the Smart Link Aggregation function when the offload transmission duration is longer than the anti-addiction control duration, thereby reducing users' game experience to prevent users from playing games for too long, which helps users control the game time reasonably.

In a possible example, in the aspect of recording an offload transmission duration for offloading and transmitting the game data packet, the processing unit 601 is specifically configured to: upon detecting the target game application closes the Smart Link Aggregation function or exits from the foreground, cease the recording an offload transmission duration for offloading and transmitting the game data packet; and upon detecting the target game application enables the Smart Link Aggregation function and is running in the foreground, resume the recording an offload transmission duration for offloading and transmitting the game data packet.

In a possible example, in the aspect of detecting the target game application offloads and transmits a game data packet through a Smart Link Aggregation function, the processing unit 601 is specifically configured to: select, randomly, at least two wireless communication links to offload and transmit the game data packet of the target game application; or select, according to system state parameters, at least two wireless communication links to offload and transmit the game data packet of the target game application; or select, according to user setting information, at least two wireless communication links to offload and transmit the game data packet of the target game application.

In a possible example, in the aspect of transmitting the game data packet through one of the plurality of wireless communication links, the processing unit 601 is specifically configured to: determine the wireless communication links for offloading and transmitting the game data packet of the target game application as a first wireless communication link and a second wireless communication link; acquire channel quality parameters of the first wireless communication link and the second wireless communication link, the channel quality parameter including a data transmission rate and a transmission delay; and determine, according to the channel quality parameters of the first wireless communication link and the second wireless communication link, to transmit the game data packet through the first wireless communication link or the second wireless communication link when offload and transmission of the game data packet is ended.

In a possible example, in the aspect of determining, according to the channel quality parameters of the first wireless communication link and the second wireless communication link, to transmit the game data packet through the first wireless communication link or the second wireless communication link when offload and transmission of the game data packet is ended, the processing unit 601 is specifically configured to: score, according to the channel quality parameter of the first wireless communication link, the communication quality of the first wireless communication link to obtain a first score; score, according to the channel quality parameter of the second wireless communication link, the communication quality of the second wireless communication link to obtain a second score; and upon detecting the first score is lower than the second score, transmit the game data packet through the first wireless communication link; or, upon detecting the second score is lower than the first score, transmit the game data packet through the second wireless communication link.

In a possible example, the first wireless communication link is a wireless fidelity (WIFI) wireless communication link, and the second wireless communication link is a data network wireless communication link.

In a possible example, the processing unit 601 is specifically configured to: acquire an average usage duration of a plurality of game applications, the plurality of game applications including the target game application; determine, according to the average usage duration of the plurality of game applications, the anti-addiction control duration of each of the plurality of game applications; and establish a mapping relationship between the plurality of game applications and corresponding anti-addiction control durations, the mapping relationship being configured to determine the target anti-addiction control duration of the target game application.

An embodiment of the disclosure also provides a computer storage medium. The computer storage medium stores a computer program for electronic data exchange, and the computer program enables a computer to execute part or all of the steps of any method as recorded in the above method embodiments. The computer includes an electronic device.

An embodiment of the disclosure also provides a computer program product. The computer program product includes a non-transitory computer-readable storage medium storing a computer program. The computer program, when executed by a computer, cause the computer to perform part or all of the steps of any method as recorded in the above method embodiments. The computer program product may be a software installation package. The computer includes an electronic device.

It should be noted that, for the sake of simple description, the above method embodiments are all expressed as a series of action combinations. However, those of ordinary skill in the art should know that the disclosure is not limited to the described action sequence, because according to the disclosure, some steps may be performed in other order or performed simultaneously. Secondly, those of ordinary skill in the art should also know that the embodiments described in the specification are all preferred embodiments, and the actions and modules involved are not necessarily required by the application.

In the above embodiments, the description of each embodiment has its own emphasis. For the part not described in detail in one embodiment, reference may be made to related descriptions of other embodiments.

In the several embodiments provided in the disclosure, it should be understood that the disclosed apparatus may be implemented in other forms. For example, the apparatus embodiments described above are only illustrative. For example, the division of units is only a logical function division, and there may be other division methods in actual implementation, for example, multiple units or components can be combined or integrated into another system, or some features can be ignored or not implemented. In addition, the shown or discussed coupling, such as direct coupling or communication connection, may be indirect coupling or communication connection through some interfaces, apparatus, or units, and it may be an electrical coupling or other forms of coupling.

The units described above as separate components may or may not be physically separated, and the components shown as units may or may not be physical units, that is, the units may be located in one place, or they may be distributed on multiple network units. Some or all of the units may be selected according to actual needs to achieve the objectives of the solutions of the embodiments.

In addition, the functional units in each embodiment of the disclosure may be integrated into one processing unit, or each unit may exist physically alone, or two or more units may be integrated into one unit. The integrated unit can be implemented in the form of hardware or in the form of software functional unit.

If the integrated unit is implemented in the form of a software functional unit and sold or used as an independent product, it can be stored in a computer readable memory. Based on this understanding, the technical solution of the disclosure essentially, or the part that contributes to the existing technology, or all or part of the technical solution can be embodied in the form of a software product. The computer software product is stored in a memory, and includes a number of instructions to enable a computer device (which may be a personal computer, a server, or a network device, etc.) to perform all or part of the steps of the methods in various embodiments of the disclosure. The memory includes U disk, Read-Only Memory (ROM), Random Access Memory (RAM), mobile hard disk, magnetic disk, or optical disk, and other media that can store program codes.

Those of ordinary skill in the art can understand that all or part of the steps in various methods of the above embodiments can be completed by relevant hardware with the instruction of a program. The program can be stored in a computer-readable memory, and the memory may include flash disk, Read-Only Memory (ROM), Random Access Memory (RAM), magnetic disk, or CD, etc.

The embodiments of the disclosure are described in detail above, and specific examples are used herein to illustrate the principles and implementation of the disclosure. The descriptions of the above embodiments are only used to help understand the methods and core ideas of the disclosure; at the same time, for those of ordinary skill in the art, the ideas of the disclosure may change in the specific implementation and the scope of application. In summary, the content of the specification should not be construed as limiting the disclosure.

## Claims

1. A data transmission method, applied to an electronic device, wherein the electronic device enables a plurality of wireless communication links, the method comprises:
determining a target anti-addiction control duration of a target game application in response to detecting the target game application is running in a foreground;
recording an offload transmission duration for offloading and transmitting a game data packet in response to detecting the target game application offloads and transmits the game data packet through a Smart Link Aggregation (SLA); and
ceasing to offload and transmit the game data packet through the SLA and transmitting the game data packet through one of the plurality of wireless communication links in response to detecting the offload transmission duration is longer than the target anti-addiction control duration.

2. The data transmission method as claimed in claim 1, wherein the recording an offload transmission duration for offloading and transmitting a game data packet comprises:
ceasing the recording an offload transmission duration for offloading and transmitting a game data packet in response to detecting the target game application closes the SLA or exits from the foreground; and
resuming the recording an offload transmission duration for offloading and transmitting a game data packet in response to detecting the target game application enables the SLA and is running in the foreground.

3. The data transmission method as claimed in claim 1 or claim 2, wherein the detecting the target game application offloads and transmits the game data packet through a Smart Link Aggregation (SLA) comprises:
selecting, randomly, at least two wireless communication links to offload and transmit the game data packet of the target game application; or
selecting, according to system state parameters, at least two wireless communication links to offload and transmit the game data packet of the target game application; or
selecting, according to user setting information, at least two wireless communication links to offload and transmit the game data packet of the target game application.

4. The data transmission method as claimed in any one of claims 1-3, wherein the transmitting the game data packet through one of the plurality of wireless communication links comprises:
determining the wireless communication links for offloading and transmitting the game data packet of the target game application as a first wireless communication link and a second wireless communication link;
acquiring channel quality parameters of the first wireless communication link and the second wireless communication link, the channel quality parameter comprising a data transmission rate and a transmission delay; and
determining, according to the channel quality parameters of the first wireless communication link and the second wireless communication link, to transmit the game data packet through the first wireless communication link or the second wireless communication link in response to ceasing to offload and transmit the game data packet.

5. The data transmission method as claimed in claim 4, wherein, the determining, according to the channel quality parameters of the first wireless communication link and the second wireless communication link, to transmit the game data packet through the first wireless communication link or the second wireless communication link in response to ceasing to offload and transmit the game data packet comprises:
scoring, according to the channel quality parameter of the first wireless communication link, the communication quality of the first wireless communication link, and obtaining a first score;
scoring, according to the channel quality parameter of the second wireless communication link, the communication quality of the second wireless communication link, and obtaining a second score;
transmitting the game data packet through the first wireless communication link in response to detecting the first score is lower than the second score; and
transmitting the game data packet through the second wireless communication link in response to detecting the second score is lower than the first score.

6. The data transmission method as claimed in claim 4 or claim 5, wherein the first wireless communication link is a wireless fidelity (WIFI) wireless communication link, and the second wireless communication link is a data network wireless communication link.

7. The data transmission method as claimed in any one of claims 1-3, wherein the transmitting the game data packet through one of the plurality of wireless communication links comprises:
acquiring a third wireless communication link initially set by the target game application; and
transmitting the game data packet through the third wireless communication link.

8. The data transmission method as claimed in claim 1, further comprising:
acquiring an average usage duration of a plurality of game applications, the plurality of game applications comprising the target game application;
determining, according to the average usage duration of the plurality of game applications, the anti-addiction control duration of each of the plurality of game applications; and
establishing a mapping relationship between the plurality of game applications and corresponding anti-addiction control durations, the mapping relationship being configured to determine the target anti-addiction control duration of the target game application.

9. The data transmission method as claimed in claim 1, wherein the determining a target anti-addiction control duration of a target game application comprises:
searching a preset mapping relationship between a plurality of game applications and corresponding anti-addiction control durations, and determining the target anti-addiction duration corresponding to the target game application.

10. A data transmission apparatus, applied to an electronic device, wherein the data transmission apparatus comprises a processing unit and a communication unit, and the processing unit is configured to:
determine a target anti-addiction control duration of a target game application in response to detecting the target game application is running in a foreground;
record an offload transmission duration for offloading and transmitting a game data packet in response to detecting the target game application offloads and transmits the game data packet through a Smart Link Aggregation (SLA); and
cease to offload and transmit the game data packet through the SLA and transmit, controlled by the communication unit, the game data packet through one of a plurality of wireless communication links in response to detecting the offload transmission duration is longer than the target anti-addiction control duration.

11. The data transmission apparatus as claimed in claim 10, wherein, in the aspect of recording an offload transmission duration for offloading and transmitting a game data packet, the processing unit is configured to:
cease the recording an offload transmission duration for offloading and transmitting a game data packet in response to detecting the target game application closes the SLA or exits from the foreground; and
resume the recording an offload transmission duration for offloading and transmitting a game data packet in response to detecting the target game application enables the SLA and is running in the foreground.

12. The data transmission apparatus as claimed in claim 10 or claim 11, wherein, in the aspect of detecting the target game application offloads and transmits the game data packet through a Smart Link Aggregation (SLA), the processing unit is configured to:
select, randomly, at least two wireless communication links to offload and transmit the game data packet of the target game application; or
select, according to system state parameters, at least two wireless communication links to offload and transmit the game data packet of the target game application; or
select, according to user setting information, at least two wireless communication links to offload and transmit the game data packet of the target game application.

13. The data transmission apparatus as claimed in any one of claims 10-12, wherein, in the aspect of transmitting the game data packet through one of a plurality of wireless communication links, the processing unit is configured to:
determine the wireless communication links for offloading and transmitting the game data packet of the target game application as a first wireless communication link and a second wireless communication link;
acquire channel quality parameters of the first wireless communication link and the second wireless communication link, the channel quality parameter comprising a data transmission rate and a transmission delay; and
determine, according to the channel quality parameters of the first wireless communication link and the second wireless communication link, to transmit the game data packet through the first wireless communication link or the second wireless communication link in response to ceasing to offload and transmit the game data packet.

14. The data transmission apparatus as claimed in claim 13, wherein, in the aspect of determining, according to the channel quality parameters of the first wireless communication link and the second wireless communication link, to transmit the game data packet through the first wireless communication link or the second wireless communication link in response to ceasing to offload and transmit the game data packet, the processing unit is configured to:
score, according to the channel quality parameter of the first wireless communication link, the communication quality of the first wireless communication link, and obtain a first score;
score, according to the channel quality parameter of the second wireless communication link, the communication quality of the second wireless communication link, and obtain a second score; and
transmit the game data packet through the first wireless communication link in response to detecting the first score is lower than the second score; or
transmit the game data packet through the second wireless communication link in response to detecting the second score is lower than the first score.

15. The data transmission apparatus as claimed in claim 13 or claim 14, wherein the first wireless communication link is a wireless fidelity (WIFI) wireless communication link, and the second wireless communication link is a data network wireless communication link.

16. The data transmission apparatus as claimed in any one of claims 10-12, wherein, in the aspect of transmitting the game data packet through one of a plurality of wireless communication links, the processing unit is further configured to:
acquire a third wireless communication link initially set by the target game application; and
transmit the game data packet through the third wireless communication link.

17. The data transmission apparatus as claimed in claim 10, wherein the processing unit is further configured to:
acquire an average usage duration of a plurality of game applications, the plurality of game applications comprising the target game application;
determine, according to the average usage duration of the plurality of game applications, the anti-addiction control duration of each of the plurality of game applications; and
establish a mapping relationship between the plurality of game applications and corresponding anti-addiction control durations, the mapping relationship being configured to determine the target anti-addiction control duration of the target game application.

18. The data transmission apparatus as claimed in claim 10, wherein, in the aspect of determining a target anti-addiction control duration of a target game application, the processing unit is configured to:
search a preset mapping relationship between a plurality of game applications and corresponding anti-addiction control durations, and determine the target anti-addiction duration corresponding to the target game application.

19. An electronic device, comprising a processor, a memory, a communication interface, and one or more programs, wherein the one or more programs are stored in the memory and configured to be executed by the processor, and the one or more programs comprises instructions for executing steps in the method as claimed in any one of claims 1-9.

20. A computer-readable storage medium, storing a computer program for electronic data exchange which, when executed by a computer, causes the computer to perform the method as claimed in any one of claims 1-9.
